# EUROPEAN PATENT SPECIFICATION

(11) **EP 2 833 459 B1**
(45) Date of publication and mention of the grant of the patent: **20.12.2017**
(21) Application number: 14155537.5
(22) Date of filing: 18.02.2014
(51) Int. Cl.: H01M 10/04, H01M 10/052, H01M 10/0587, H01M 10/42

(54) **Secondary battery**
Sekundärbatterie
Batterie secondaire

(30) Priority: 31.07.2013 KR 20130091086
(43) Date of publication of application: 04.02.2015
(73) Proprietor: Samsung SDI Co., Ltd., Yongin-si, Gyeonggi-do (KR)
(72) Inventor: Kim, Hong-Jeong, Yongin-si (KR); Lee, Jong-Ki, Yongin-si (KR); Chang, Seok-Gyun, Yongin-si (KR); Kwak, Eun-Ju, Yongin-si (KR)
(74) Representative: Gulde & Partner

(56) References cited:
- CN-U- 202 712 358
- US-A1- 2013 157 142
- US-B1- 6 623 884

## Description

### BACKGROUND

### 1. Field

An aspect of the present invention relates to a secondary battery.

### 2. Description of the Related Art

Secondary batteries widely used as power sources of portable devices can be reversibly charged/discharged a plurality of times, and thus can be reused. Accordingly, the secondary batteries can be efficiently used. The shape of the secondary batteries used can be freely changed according to external electronic devices in which the secondary batteries are employed. As such, the secondary batteries can effectively accumulate energy, as compared with their volumes and masses. Accordingly, the secondary batteries are frequently used as power sources of portable electronic devices.

Particularly, with the development of portable communication devices, demands on the secondary batteries employed in the communication devices have recently been increased. Thus, studies have been conducted in many fields to improve reliability including the lifespan of the secondary batteries. etc. A battery according to the state of the art is disclosed in the document US 6 623 884 B1.

### SUMMARY

The present invention is defined by the appended claims. Embodiments provide a secondary battery having improved reliability including the lifespan of the secondary battery, etc.

Embodiments also provide a secondary battery including a new electrode assembly, which has both high-capacity and high-power characteristics.

According to an aspect of the present invention, there is provided a secondary battery, including: a high-capacity electrode portion configured to include a first positive electrode plate, a first negative electrode plate opposite to the first positive electrode plate, and a first separator portion interposed between the first positive electrode plate and the first negative electrode plate; a high-power electrode portion configured to include a second positive electrode plate, a second negative electrode plate opposite to the second positive electrode plate, and a second separator portion interposed between the second positive electrode plate and the second negative electrode plate; and a battery case configured to accommodate the high-capacity electrode portion, the high-power electrode portion and an electrolyte therein, wherein the volume of the second positive electrode active material coating portion is 2 vol% to 20 vol% of that of the first and second positive electrode active material coating portions. According to the invention, the power density of the high-power electrode portion is at least four times greater than that of the high-capacity electrode portion. The power density of the high-power electrode portion may be 1000W/L or more. The power ratio of the high-power electrode portion according to the following Formula 1 may be one to five times of that of the high-capacity electrode portion:

### Formula 1

Total power of the high-power electrode portion (volume ratio of high-power electrode portion*power density of high-power electrode portion)/total power of the high-capacity electrode portion (volume ratio of high-capacity electrode portion*power density of high-capacity electrode portion).

The energy density of the high-capacity electrode portion may be 550Wh/L or more. The energy density of the high-power electrode portion may be 1/4 to 1/3 of that of the high-capacity energy portion.

The power density of the high-power electrode portion may be 3000WL to 8000W/L. The power density of the high-capacity electrode portion may be 560W/L to 630W/L.

The energy density of the high-power electrode portion may be 120Wh/L to 280Wh/L. The energy density of the high-capacity electrode portion may be 560Wh/L to 630Wh/L.

The high-power electrode portion and the high-capacity electrode portion may be electrically connected in parallel to each other.

At least one pair of the first and second electrode plates of the first and second positive electrode plates and the first and second negative electrode plates may be integrally formed using connected first and second electrode substrate connected in a first direction.

For instance, the first and second positive electrode plates may be integrally formed using connected first and second positive electrode substrate connected in the first direction and the first and second negative electrode plates are integrally formed using connected first and second negative electrode substrate connected in the first direction, the connected first and second negative electrode substrates being separated from the connected first and second positive electrode substrates by a separator comprising the first and second separator portions wherein the integrally formed first and second positive electrode plates, the integrally formed first and second negative electrode plates and the separator are wound in one jelly-roll shape.

The first positive electrode plate may include a first positive electrode non-coating portion in which the first positive electrode active material is not coated so that the first positive electrode substrate is exposed, and the second positive electrode plate may include a second positive electrode non-coating portion in which the second positive electrode active material is not coated so that the second positive electrode substrate is exposed. The first negative electrode plate may include a first negative electrode non-coating portion in which the first negative electrode active material is not coated so that the first negative electrode substrate is exposed, and the second negative electrode plate may include a second negative electrode non-coating portion in which the second negative electrode active material is not coated so that the second negative electrode substrate is exposed. The first positive electrode plate, the first negative electrode plate and the separator may be wound in one jelly-roll shape. The second positive electrode plate, the second negative electrode plate and the separator may be wound in another jelly-roll shape, separately from the first positive electrode plate, the first negative electrode plate and the separator.

The first and second positive electrode substrates may be connected in a first direction so that the first and second positive electrode plates are integrally formed. The first positive electrode non-coating portion, the first positive electrode active material coating portion, the second positive electrode non-coating portion and the second positive electrode active material coating portion may be sequentially aligned on the first and second positive electrode substrates connected in the first direction.

The first and second positive electrode substrates may be connected in the first direction so that the first and second positive electrode plates are integrally formed. The first positive electrode non-coating portion, the first positive electrode active material coating portion, the second positive electrode active material coating portion and the second positive electrode non-coating portion may be sequentially aligned on the first and second positive electrode substrates connected in the first direction.

The first and second negative electrode substrates may be connected in the first direction so that the first and second negative electrode plates are integrally formed. The first negative electrode non-coating portion, the first negative electrode active material coating portion, the second negative electrode non-coating portion and the second negative electrode active material coating portion may be sequentially aligned on the first and second negative electrode substrates connected in the first direction.

The first and second negative electrode substrates may be connected in the first direction so that the first and second negative electrode plates are integrally formed. The first negative electrode non-coating portion, the first negative electrode active material coating portion and the second negative electrode active material coating portion may be sequentially aligned on the first and second negative electrode substrates connected in the first direction.

The first negative electrode active material coated in the first negative electrode active material coating portion and the second negative electrode active material coated in the second negative electrode active material coating portion may be made of the same material.

First and second positive electrode tabs may be respectively provided to the first and second positive electrode non-coating portions.

The first and second positive electrode tabs may be electrically connected to each other by being protruded in a second direction.

The high-power electrode portion and the high-capacity electrode portion share the electrolyte. According to the present invention, it is possible to provide a secondary battery having improved reliability including the lifespan of the secondary battery, etc.

Further, it is possible to provide a secondary battery including a new electrode assembly, which has both high-capacity and high-power characteristics.

### BRIEF DESCRIPTION OF THE DRAWINGS

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the example embodiments to those skilled in the art.

In the drawing figures, dimensions may be exaggerated for clarity of illustration. It will be understood that when an element is referred to as being "between" two elements, it can be the only element between the two elements, or one or more intervening elements may also be present. Like reference numerals refer to like elements throughout.
FIG. 1 is a perspective view of a secondary battery according to an embodiment of the present invention.
FIG. 2 is a perspective view of an electrode assembly according to the embodiment of the present invention.
FIG. 3A is an exploded perspective view of the electrode assembly of FIG. 2.
FIG. 3B is a sectional view taken along line I-I of FIG. 3A.
FIG. 4A is a perspective view of positive and negative electrode plates of FIG. 3A.
FIG. 4B is a perspective view showing another embodiment of the positive electrode plate of FIG. 3A.
FIG. 4C is a perspective view showing another embodiment of the negative electrode plate of FIG. 3A.
FIG. 5 is a perspective view of a secondary battery according to another embodiment of the present invention.
FIG. 6 is an exploded perspective view of the secondary battery of FIG. 5.
FIG. 7 is an exploded perspective view of an electrode assembly of FIG. 6.
FIG. 8 is a sectional view taken along line II-II of FIG. 7.

### DETAILED DESCRIPTION

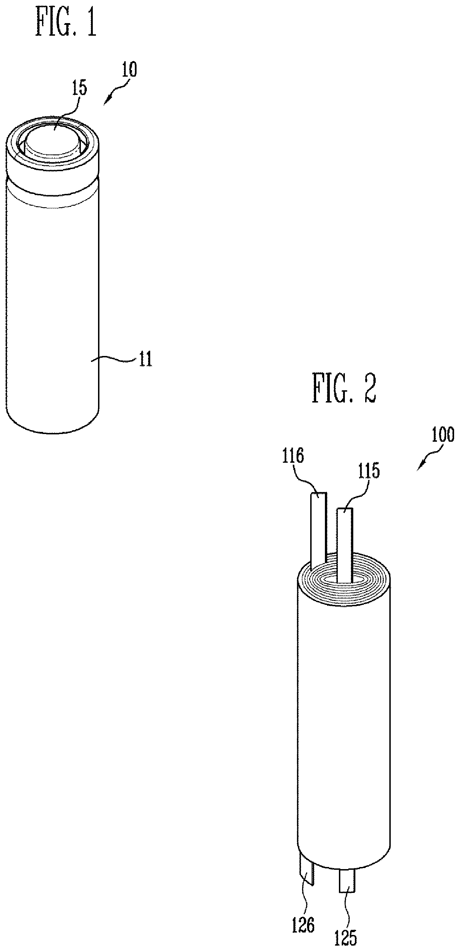

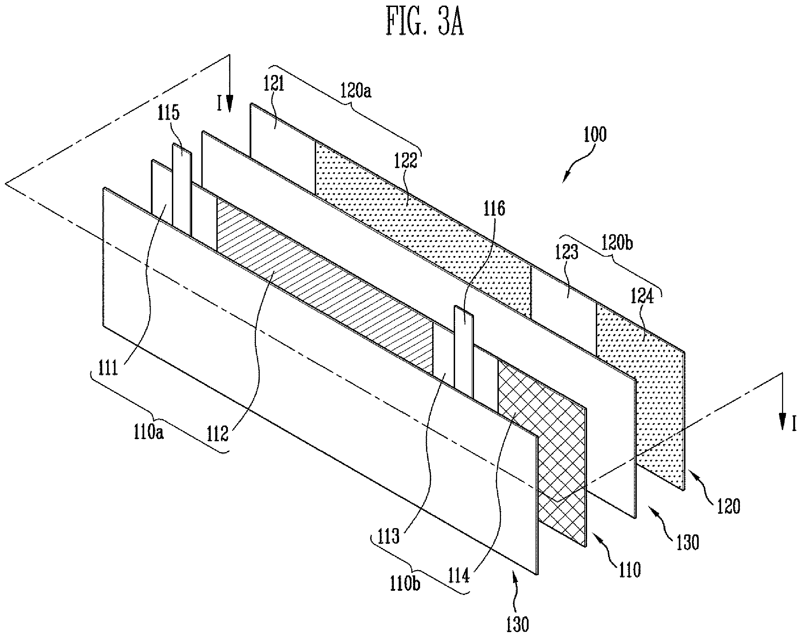

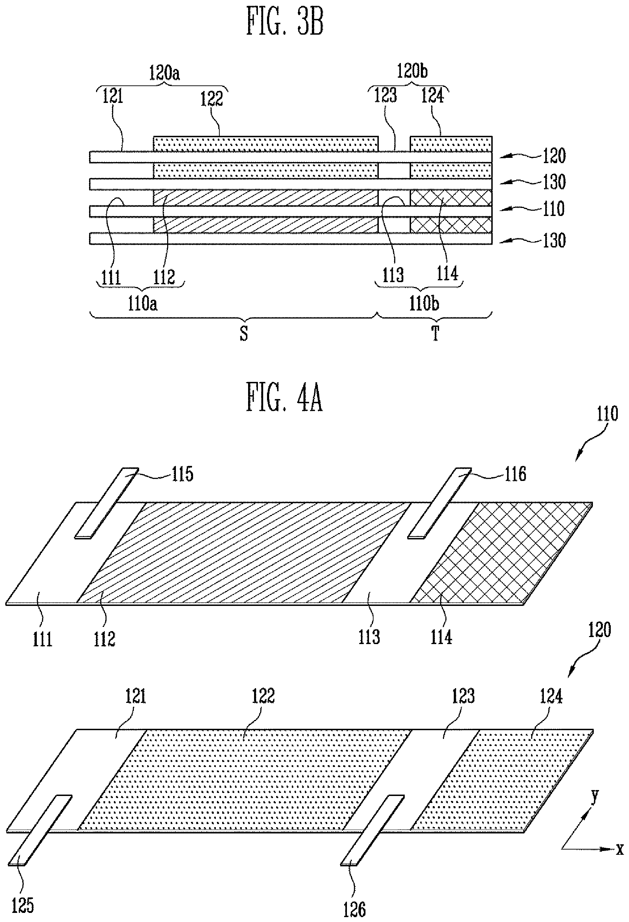

In the following detailed description, only certain exemplary embodiments of the present invention have been shown and described, simply by way of illustration. As those skilled in the art would realize, the described embodiments may be modified in various different ways, all without departing from the scope of the present invention as defined by the appended claims. Accordingly, the drawings and description are to be regarded as illustrative in nature and not restrictive. In addition, when an element is referred to as being "on" another element, it can be directly on the another element or be indirectly on the another element with one or more intervening elements interposed therebetween. Also, when an element is referred to as being "connected to" another element, it can be directly connected to the another element or be indirectly connected to the another element with one or more intervening elements interposed therebetween. Hereinafter, like reference numerals refer to like elements. FIG. 1 is a perspective view of a secondary battery according to an embodiment of the present invention. FIG. 2 is a perspective view of an electrode assembly according to the embodiment of the present invention. FIG. 3A is an exploded perspective view of the electrode assembly of FIG. 2. FIG. 3B is a sectional view taken along line I-I of FIG. 3A.

The secondary battery 10 according to this embodiment may include a battery case 11 and 15, and an electrolyte and an electrode assembly 100, which are accommodated in the battery case 11 and 15. The electrode assembly 100 may include a positive electrode plate 110, a negative electrode plate 120 and a separator 130 interposed between the positive and negative electrode plates 110 and 120. The positive electrode 110 may include first and second positive electrode plates 110a and 110b, and the negative electrode plate 120 may include first and second negative electrode plates 120a and 120b. In this case, the first positive electrode plate 110a and the first negative electrode plate 120a may be provided opposite to each other to form a high-capacity electrode portion S, and the second positive electrode plate 110b and the second negative electrode plate 120b may be provided opposite to each other to form a high-power electrode portion T.

The electrode assembly 100 may be divided into a high-capacity electrode portion S and a high-power electrode portion T. Here, the high-capacity electrode portion S may include a first positive electrode plate 110a configured to have a first positive electrode active material coating portion 112 in which a first positive electrode active material is coated on a first positive electrode substrate also called a first positive electrode base material; a first negative electrode plate 120a configured to have a first negative electrode active material coating portion 122 in which a first negative electrode active material is coated on a first negative electrode substrate also called a first negative electrode base material; and a separator 130 interposed between the first positive electrode plate 110a and the first negative electrode plate 120a. The high-power electrode portion T may include a second positive electrode plate 110b configured to have a second positive electrode active material coating portion 114 in which a second positive electrode active material is coated on a second positive electrode substrate also called a second positive electrode base material; a second negative electrode plate 120b configured to have a second negative electrode active material coating portion 124 in which a second negative electrode active material is coated on a second negative electrode substrate also called a second negative electrode base material; and a separator 130 interposed between the second positive electrode plate 110b and the second negative electrode plate 120b. The high-capacity electrode portion S, the high-power electrode portion T and the electrolyte may be accommodated in the battery case, and the electrolyte may come in contact with the high-capacity electrode portion S and the high-power electrode portion T. The power density of the high-power electrode portion S is according to the present invention at least four times greater than that of the high-capacity electrode portion T, and the volume of the second positive electrode active material coating portion 112 with respect to those of the first and second positive electrode active material coating portions 112 and 114 is according to the present invention 2 to 20 vol%.

The battery case 11 and 15 may include a main body 11 configured to have one opened surface and accommodate the electrode assembly 100 and the electrolyte therein, and a cap assembly 15 configured to hermetically seal the opened surface of the main body 11. For example, the cap assembly 15 may be electrically connected to the positive electrode plate 110 of the electrode assembly 100, and the main body 11 may be electrically connected to the negative electrode plate 120 of the electrode assembly 100. The cap assembly 15 and the main body 11 may have different polarities. The main body 11 and the cap assembly 15 may be insulated with an insulator such as a gasket.

The electrolyte enables ions such as lithium ions to move between the positive and negative electrode plates 110 and 120. The electrolyte may further include a lithium salt or additive acting as a supply source of lithium ions in the secondary battery. The electrolyte may be a non-aqueous organic solvent, and the non-aqueous organic solvent serves as a medium through which ions participating in an electrochemical reaction of the battery can move. The non-aqueous organic solvent may include one or more selected from carbonate-based, ester-based, ether-based, ketone-based, alcohol-based and aprotic solvents. However, the present invention is not limited thereto. The carbonate-based solvent may include, for example, a chain type carbonate compound such as dimethyl carbonate (DMC), diethyl carbonate (DEC), dipropyl carbonate (DPC), methylpropyl carbonate (MPC), ethylpropyl carbonate (EPC), methylethyl carbonate (MEC) or ethylmethyl carbonate (EMC); a cyclic carbonate compound such as ethylene carbonate (EC), propylene carbonate (PC) or butylene carbonate (BC); and the like. However, the present invention is not limited thereto. The ester-based solvent may include, for example, methyl acetate, ethyl acetate, n-propyl acetate, dimethyl acetate, methylpropionate, ethylpropionate, decanolide, valerolactone, mevalerolactone, caprolactone, and the like. However, the present invention is not limited thereto. The ether-based solvent may include, for example, dibutyl ether, tetraglyme, diglyme, dimethoxyethane, 2-methyltetrahydrofuran, tetrahydrofuran, and the like. However, the present invention is not limited thereto. The ketone-based solvent may include, for example, cyclohexanone and the like. However, the present invention is not limited thereto. The alcohol-based solvent may include, for example, ethyl alcohol, isopropyl alcohol, and the like. However, the present invention is not limited thereto.

The non-aqueous organic solvent may be a single solvent or a mixture of one or more solvents. In a case where one or more organic solvents are used in a mixture, the mixture ratio may be appropriately controlled according to a desired battery performance.

The lithium salt is dissolved in an organic solvent, to act as a supply source of lithium ions in the battery, thereby enabling a basic operation of a lithium secondary battery. The lithium salt improves lithium ion transportation between positive and negative electrodes. Specific examples of the lithium salt may include LiPF₆, LiBF₄, LiSbF₆, LiAsF₆, LiN(SO₃C₂F₅)₂, LiC₄F9SO₃, LiClO₄, LiAlO₂, LiAlCl₄, LiN(CₓF₂ₓ+1SO₂)(C_{y}F_{2y}+1SO₂) (where x and y are natural numbers), LiCl, Lil, and LiB(C₂O₄)₂ (lithium bisoxalato borate; LiBOB), or combination thereof. The lithium salt may be used, for example, in a concentration ranging from about 0.1 M to about 2.0 M. The concentration of the lithium salt may be variously applied according to design specifications of secondary batteries. The electrode assembly 100 may be formed by winding or stacking the positive and negative electrode plates 110 and 120 opposite to each other, and the separator 130 interposed between the positive and negative electrode plates 110 and 120. Although only the electrode assembly 100 in a wound form has been illustrated in these figures, the present invention is not limited thereto.

The separator 130 is used to prevent the positive and negative electrode plates 110 and 120 from coming in direct contact with each other. The separator 130 may be made of a porous insulator so that the ions or electrolyte can move between the positive and negative electrode plates 110 and 120. For example, the separator 130 may include a polyolefin-based polymer layer such as polypropylene, polyethylene, polyethylene/polypropylene, polyethylene/polypropylene/polyethylene, or polypropylene/polyethylene/polypropylene, or multi-layers thereof, a microporous film, a web and a nonwoven. The separator 130 may include a film formed by coating a porous polyolefin film with a polymer resin having excellent stability.

The positive electrode plate 110 may include a first positive electrode plate 110a and a second positive electrode plate 110b. The first positive electrode plate 110a may include a first positive electrode active material coating portion 112 in which a first positive electrode active material is coated on a first positive electrode substrate, and a first positive electrode non-coating portion 111 in which the first positive electrode active material is not coated so that the first positive electrode substrate is exposed. The second positive electrode plate 110b may include a second positive electrode active material coating portion 114 in which a second positive electrode active material is coated on a second positive electrode substrate, and a second positive electrode non-coating portion 113 in which the second positive electrode active material is not coated so that the second positive electrode substrate is exposed.

The first and second positive electrode materials are made of a material having high conductivity, which is not particularly limited as long as it does not cause a chemical change. For example, the positive substrate may include aluminum, nickel, titanium, heat-treated carbon, etc. The first and second positive electrode active materials may include a lithium compound that is a layered compound containing lithium. The first and second positive electrode active materials may further include a conducting agent configured to improve the conductivity of the first and second positive electrode active materials, and a binder configured to improve the coupling force between the lithium compound and the first and second positive electrode substrates. The first and second positive electrode active materials are made in a slurry state by mixing the lithium compound, the conducting agent and the binder together with a solvent. Then, the first and second positive electrode active materials in the slurry state are coated on the respective first and second positive electrode substrates. Preferably, the solvent may include N-methyl-2-pyrrolidone (NMP), and the lithium compound may include LiCoOx, LiMnOx, LiNiOx (x is a natural number), etc. The conducting agent may include carbon black or acetylene black, and the binder may include polyvinylidene fluoride. However, the present invention is not limited thereto.

The negative electrode plate 120 may include a first negative electrode plate 120a and a second negative electrode plate 120b. The first negative electrode plate 120a may include a first negative electrode active material coating portion 122 in which a first negative electrode active material is coated on a first negative electrode substrate, and a first negative electrode non-coating portion 121 in which the first negative electrode active material is not coated so that the first negative electrode substrate is exposed. The second negative electrode plate 120b may include a second negative electrode active material coating portion 124 in which a second negative electrode active material is coated on a second negative electrode substrate, and a second negative electrode non-coating portion 123 in which the second negative electrode active material is not coated so that the second negative electrode substrate is exposed.

The first and second negative electrode substrates may be conductive metal plates, which are formed of, for example, copper, stainless steel, aluminum, nickel, etc. The first and second negative electrode active materials may include a carbon compound. Here, the first and second negative electrode active materials may further include the carbon compound and a binder configured to improve the coupling force between the first and second negative electrode substrates. The first and second negative electrode active materials are made in a slurry state by mixing the carbon compound and the binder with a solvent. Then, the first and second negative electrode active materials are coated on the respective first and second negative electrode substrates. Preferably, the solvent may include water, and the carbon compound may include graphite. The binder may include styrene-butadiene rubber, etc. However, the present invention is not limited thereto.

The positive and negative electrode plates 110 and 120 are opposite to each other. For example, the first positive electrode plate 110a may be provided opposite to the first negative electrode plate 120a, and the second positive electrode plate 110a may be provided opposite to the second negative electrode plate 120b. The first positive electrode plate 110a and the first negative electrode plate 120a may form the high-capacity electrode portion S, and the second positive electrode plate 110b and the second negative electrode plate 120b may form the high-power electrode portion T. The substantial supply source of lithium ions in the first positive electrode plate 110a may be the first positive electrode active material coating portion 112, and the substantial supply source of lithium ions in the second positive electrode plate 110b may be the second positive electrode active material coating portion 114. In this case, the first and second positive electrode active material coating portions 112 and 114 are provided to be spaced apart from each other by the second positive electrode non-coating portion 113. Thus, the first and second positive electrode active material coating portions 112 and 114 can respectively exchange ions with the first and second negative electrode active material coating portions provided closest to be directly opposite to the first and second positive electrode active material coating portions 112 and 114. Accordingly, the positive and negative electrode plates 110 and 120 can be divided into the high-capacity electrode portion S and the high-power electrode portion T. In each of the high-capacity electrode portion S and the high-power electrode portion T, the positive electrode active material coating portion and the negative electrode active material coating portion, opposite to each other, exchange ions with each other. Simultaneously, the high-capacity electrode portion S and the high-power electrode portion T are electrically connected to each other. Thus, the high-capacity electrode portion S and the high-power electrode portion T can interact with each other through the flow of current between the high-capacity electrode portion S and the high-power electrode portion T.

Generally, a secondary battery is a power source of an electronic device, and may act as a supply source of current consumed by the electronic device. In this case, the state of current required in the secondary battery is changed depending on characteristics and use patterns of the electronic device, but the expectation for the lifespan and use time of the secondary battery is always high. On the other hand, the required power and use capacity of the electronic device in an operation time are different from those of the electronic device in a waiting time, but an ordinary secondary battery has any one of high-capacity and high-power characteristics. Particularly, in a case where a secondary battery having high capacity is used as a power source of an electronic device having a large variation in load, it is difficult to flexibly cope with a variation from base load to peak load in the electronic device. As such a problem repetitively occurs, the degradation of the secondary battery is accelerated, thereby lowering the lifespan and use time of the secondary battery. Further, a secondary battery having excellent power characteristics generally has low capacity. In a case where the secondary battery is used as a power source of an electronic device, the use time of the electronic device is shortened, which is problematic.

On the other hand, the secondary battery according to this embodiment includes a high-capacity electrode portion configured to take charge of high capacity, and a high-power electrode portion configured to take charge of high power. Thus, the secondary battery can flexibly cope with the load of an electronic device having a large change in load, using the high-power electrode portion, and can increase its use time, using the high-capacity electrode portion. For example, the high-power electrode portion can quickly generate high current in a state in which the electronic device has a peak load, and thus the secondary battery is not damaged, thereby improving the lifespan of the secondary battery. Further, in the secondary battery, the high-capacity electrode portion and the high-power electrode portion share the electrolyte in one battery case, thereby decreasing the size of the secondary battery. In the secondary battery according to this embodiment, the high-capacity electrode portion and the high-power electrode portion electrically interact with each other, so that a separate voltage regulation device connecting the high-capacity electrode portion and the high-power electrode portion can be omitted, thereby reducing production cost of the secondary battery.

In the positive electrode plate 110, the first and second positive electrode plates 110a and 110b may be respectively formed using separate first and second positive electrode substrates, or may be integrally formed using first and second positive electrode substrates connected to each other. Similarly, in the negative electrode plate 120, the first and second negative electrode plates 120a and 120b may be respectively formed using separate first and second negative electrode substrates, or may be integrally formed using first and second negative electrode substrates connected to each other. In a case where the first and second positive electrode plates 110a and 110b are individually formed, the first and second negative electrode plates 120a and 120b may be integrally or individually formed, and are not influenced by the shapes of the respective first and second positive electrode plates 110a and 110b. If the first and second positive electrode plates 110a and 110b and the first and second negative electrode plates 120a and 120b are provided opposite to each other, each of the first and second positive electrode plates 110a and 110b and the first and second negative electrode plates 120a and 120b may be provided in plural numbers. For example, the first positive electrode plate 110a may be provided in two or more. In this case, the second positive electrode plate 110b may be provided between two first positive electrode plates 110a adjacent to each other, or may be provided at the outside of the first positive electrode plate 110a. On the other hand, although it has been described in this embodiment that the first and second positive electrode plates 110a and 110b are integrally formed and the first and second positive electrode plates 120a and 120b are integrally formed, the present invention is not limited thereto.

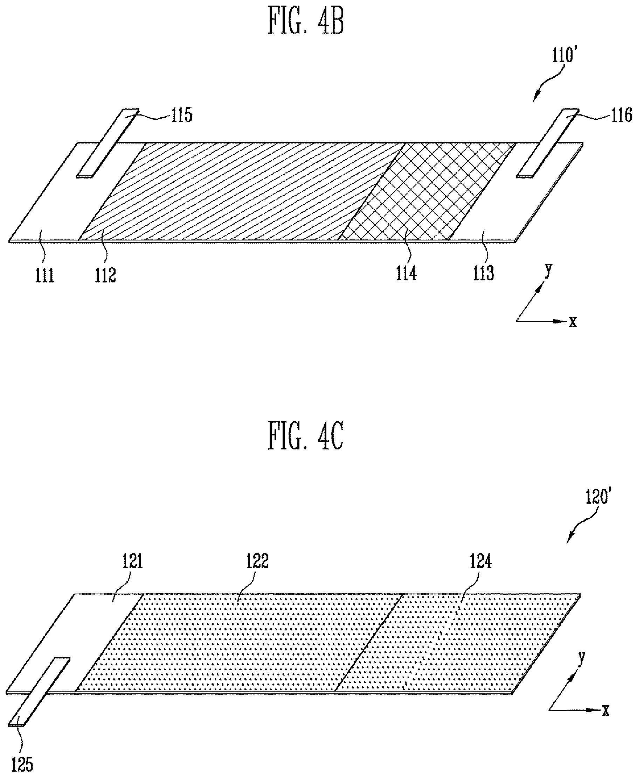

FIG. 4A is a perspective view of the positive and negative electrode plates of FIG. 3A. FIG. 4B is a perspective view showing another embodiment of the positive electrode plate of FIG. 3A. FIG. 4C is a perspective view showing another embodiment of the negative electrode plate of FIG. 3A.

Referring to FIG. 4A, the first and second positive electrode substrates are extended in a first direction (x direction) so that the first and second positive electrode plates 110a and 110b are integrally formed. The first positive electrode non-coating portion 111, the first positive electrode active material coating portion 112, the second positive electrode non-coating portion 113 and the second positive electrode active material coating portion 114 may be sequentially aligned on the first and second positive electrode substrates connected in the first direction. The first and second negative electrode substrates are extended in the first direction (x direction) so that the first and second negative electrode plates 120a and 120b are integrally formed. The first negative electrode non-coating portion 121, the first negative electrode active material coating portion 122, the second negative electrode non-coating portion 123 and the second negative electrode active material coating portion 124 may be sequentially aligned on the first and second negative electrode substrates connected in the first direction. First and second positive electrode tabs 115 and 116 may be respectively provided to the first and second positive electrode non-coating portions 111 and 113, and first and second negative electrode tabs 125 and 126 may be respectively provided to the first and second non-coating portions 121 and 123. The first and second positive electrode non-coating portions 111 and 113 are provided opposite to the first and second non-coating portions 121 and 123, and the first and second positive electrode plates 110a and 110b and the first and second negative electrode plates 120a and 120b are wound with the separator interposed therebetween, thereby forming a jelly-roll type electrode assembly.

As described above, the high-capacity electrode portion S (see FIG. 3B) includes a first electrode plate 110a configured to include the first positive electrode non-coating portion 111 and the first positive electrode active material coating portion 112, the first negative electrode plate 120a configured to include the first negative electrode non-coating portion 121 and the first negative electrode active material coating portion 122, and the separator interposed between the first positive electrode plate 110a and the first negative electrode plate 120a. The high-power electrode portion T (see FIG. 3B) includes the second positive electrode plate 110b configured to include the second positive electrode non-coating portion 113 and the second positive electrode active material coating portion 114, the second negative electrode plate 120b configured to include the second negative electrode non-coating portion 123 and the second negative electrode active material coating portion 124, and the separator interposed between the second positive electrode plate 110b and the second negative electrode plate 120b. In this case, the high-capacity electrode portion and the high-power electrode portion may be connected in parallel to each other. Here, the first positive electrode tab 115 of the high-capacity electrode portion may be electrically connected to the second positive electrode tab 116 of the high-power electrode portion, and the first negative electrode tab 125 of the high-capacity electrode portion may be electrically connected to the second negative electrode tab 126 of the high-power electrode portion.

The first and second positive electrode tabs 115 and 116 may be protruded in a second direction (y direction) to be electrically connected to each other. The first and second negative electrode tabs 125 and 126 may be protruded in a direction (-y direction) opposite to the second direction to be electrically connected to each other. The first and second positive electrode tabs 115 and 116 connected to each other may be directly connected to a portion taking in charge of the positive electrode terminal in the secondary battery or may be connected to the portion, using a separate electrode lead. On the other hand, in this embodiment, the first and second positive electrode tabs 115 and 116 are protruded in the second direction, and the first and second negative electrode tabs 125 and 126 are protruded in the direction opposite to the second direction, in order to prevent a short circuit between the first and second positive electrode tabs 115 and 116 and the first and second negative electrode tabs 125 and 126. However, in a case where it is possible to prevent the short circuit by sufficiently securing a spacing distance between the first and second positive electrode tabs 115 and 116 and the first and second negative electrode tabs 125 and 126 as the electrode assembly is formed in an approximately quadrangular shape, the first and second positive electrode tabs 115 and 116 and the first and second negative electrode tabs 125 and 126 may all be protruded in the second direction to be electrically connected to each other.

FIG. 4B is a perspective view showing the shape of a positive electrode plate 110' according to another embodiment of the present invention. FIG. 4C is a perspective view showing the shape of a negative electrode plate 120' according to another embodiment of the present invention. That is, in addition to the coupling between the positive and negative electrode plates 110 and 120 of FIG. 4A, the positive electrode plate 110' of FIG. 4b may be used other than the positive electrode plate 110 of FIG. 4A, and the negative electrode plate 120' of FIG. 4C may be used other than the negative electrode plate 120 of FIG. 4A. In addition, the electrode assembly may be formed using the positive electrode plate 110' of FIG. 4b and the negative electrode plate 120' of FIG. 4C.

In the positive electrode plate 110' of FIG. 4B, the first and second positive electrode substrates are connected in the first direction (x direction) so that the first and second electrode plates 110a and 110b are integrally formed, and the first positive electrode non-coating portion 111, the first positive electrode active material coating portion 112, the second positive electrode active material coating portion 114 and the second positive electrode non-coating portion 113 may be sequentially aligned on the first and second positive electrode substrates connected in the first direction. That is, the first and second positive electrode active material coating portions 112 and 114 may be provided adjacent to each other, and the first and second positive electrode non-coating portions 111 and 113 may be respectively provided at outsides of the first and second positive electrode active material coating portions 112 and 114. The first and second positive electrode tabs 115 and 116 may be welded and coupled to the respective first and second positive electrode non-coating portions 111 and 113.

In the negative electrode plate 120' of FIG. 4C, the first and second negative electrode substrates are connected in the first direction (x direction) so that the first and second negative electrode plates 120a and 120b are integrally formed, and the first negative electrode non-coating portion 121, the first negative electrode active material coating portion 122 and the second negative electrode active material coating portion 124 may be sequentially aligned on the first and second negative electrode substrates connected in the first direction. For example, in the negative electrode plate 120' of FIG. 4C, only the first negative electrode non-coating portion 121 may be provided by omitting the second negative electrode non-coating portion 123, and the first negative electrode tab 125 may be provided to the first negative electrode non-coating portion 121. For example, in the negative electrode plate 120' of FIG. 4C, the first negative electrode active material coated on the first negative electrode active material coating portion 122 and the second negative electrode active material coated on the second negative electrode active material coating portion 124 may be made of different materials or may be made of the same material. In a case where the first and second negative electrode active materials are made of the same material, the first and second negative electrode active material coating portions 122 and 124 may be consecutively provided through one-time coating.

In the secondary battery according to this embodiment, the electrode assembly may include a high-power electrode portion configured to generate high current for a relatively short reaction time, and a high-capacity electrode portion configured to generate relatively high capacity. The power density of the high-power electrode portion is at least four times greater than that of the high-capacity electrode portion. For example, the power density of the high-power electrode portion may be 1000W/L (watt/liter) or more. Particularly, the power density of the high-power electrode portion is preferably 2000W/L to 10000WL. The power density is a term that performs comparison by standardizing outputs provided from secondary batteries (or capacitors, etc.), and means a power W which can be implemented per a predetermined volume (liter). The power density means a value which represents the maximum power in a state in which characteristics of the secondary battery are not lowered as a power per a unit volume of the secondary battery. If the maximum power or more is extracted from the secondary battery, the secondary battery may be discharged initially several times (about once or twice), but the lifespan of the secondary battery is rapidly decreased. The state in which the characteristics of the secondary battery are not lowered means that a guarantee lifespan of approximately 200 cycles to 500 cycles in the secondary battery, which is set for each product group, is maintained. Thus, the power density means the maximum power per a unit volume of the secondary battery, which can be represented in the state in which the guarantee lifespan of the secondary battery can be maintained.

The use environment of the electronic device may include a base load that is a state in which low current is generally consumed, and a peak load that is a state in which high current is suddenly consumed. For example, the peak load is a state in which high power is required for a short period of time. The most representative example of the peak load is a state in which high power is required when a transmission call is made with a GSM cellular phone in an actual product. Examples of the peak load may include a very short high-power pulse at a mili-second level, an AP burst phenomenon (mid-power pulse at a sub-second level) that power is instantaneously increased when a moving picture/game is executed in a notebook computer or tablet computer.

In the secondary battery according to this embodiment, both the high-power electrode portion and the high-capacity electrode portion generate current in the base load, and the high-power electrode portion quickly generates high current in the peak load. Subsequently, the current can be supplied from the high-capacity electrode portion to the high-power electrode portion. In a case where the power density of the high-power electrode portion is four times less than that of the high-capacity electrode portion, the countermeasure of the high-power electrode portion is not sufficient in the peak load, and therefore, the power efficiency of the secondary battery may be lowered. That is, since the power density of the high-power electrode portion is advantageous as it increases, the power density of the high-power electrode portion is preferably at least four times greater than that of the high-capacity electrode portion.

The power density of the high-power electrode portion is advantageous as it increases. In this case, as a method of increasing the power density of the high-power electrode portion, any one or more of the density and thickness of the second positive electrode active material coating portion and the loading amount of the second positive electrode active material in the second positive electrode active material coating portion may be decreased when the first and second positive electrode active material are made of the same material. On the other hand, in a case where the density and thickness of the second positive electrode active material coating portion and the loading amount of the second positive electrode active material in the second positive electrode active material coating portion are decreased, the capacity of the secondary battery may also be decreased. Therefore, the volume of the high-power electrode portion is required to be controlled within a predetermined dimensional range in order to generate high power in the peak load while maintaining the total effective capacity (actually available capacity) to be approximately similar or higher in the secondary battery having the same volume. For example, when assuming that the total volume of the first and second positive electrode active material coating portions 112 and 114 is 100 vol%, the volume of the second positive electrode active material coating portion 112 is according to the present invention 2 vol% to 20 vol% of the total volume of the first and second positive electrode active material coating portions 112 and 114. The second positive electrode active material coating portion 114 is a portion that takes charge of the high-power electrode portion. If the volume of the second positive electrode active material coating portion 114 is less than 2 vol%, a predetermined current cannot be generated in the peak load with the power density of the high-power electrode portion, and therefore, the effect caused by the high-power electrode portion is slight. On the other hand, if the volume of the second positive electrode active material coating portion 114 exceeds 20 vol%, the energy density of the secondary battery is decreased corresponding to the capacity of the secondary battery, and therefore, the actual use time of the secondary battery may be decreased. That is, in a case where the first and second positive electrode active materials are made of the same material, at least one of the density and thickness of the second positive electrode active material coating portion and the loading amount of the second positive electrode active material in the second positive electrode active material coating portion is provided smaller than that of the first positive electrode active material coating portion. In this case, the volume of the second positive electrode active material coating portion 112 is according to the present invention 2 vol% to 20 vol% of the total volume of the first and second positive electrode active material coating portions 112 and 114.

The power density of the high-power electrode portion may be 1000W/L or more, and the power ratio of the high-power electrode portion may be one to five times greater than that of the high-capacity electrode portion. Here, the power ratio may be represented according to the following Formula 1. The power ratio means a ratio of total powers which can be respectively generated from the high-power electrode portion and the high-capacity electrode portion. That is, the power ratio means a ratio of values obtained by respectively multiplying the volumes of the high-power electrode portion and the high-capacity electrode portion by the power densities of the high-power electrode portion and the high-capacity electrode portion.

### Formula 1

Total power of the high-power electrode portion (volume ratio of high-power electrode portion*power density of high-power electrode portion)/total power of the high-capacity electrode portion (volume ratio of high-capacity electrode portion*power density of high-capacity electrode portion)

For example, in a case where the power density of the high-power electrode portion is 4500W/L, the power density of the high-capacity electrode portion is 560W/L, and the volume ratio of the high-power electrode portion and the high-capacity electrode portion is 1:5, the total power of the high-power electrode portion is 4500W (4500W/L*1), and the total power of the high-capacity electrode portion is 2800W (560W/L*5). Therefore, the output ratio is 4500:2800, i.e., 1.6:1.

The power density of the high-power electrode portion is preferably 1000W/L or more in order to generate high power as a power source of the electronic device. In the secondary battery according to this embodiment, it is possible to provide a high-power electrode portion which can flexibly cope with the load of an electronic device in the peak load with a power density of 1000W/L or more. On the other hand, since the high-capacity electrode portion is a portion that takes charge of capacity other than power density, the absolute numerical value of the power density is not important in the high-capacity electrode portion, unlike the high-power electrode portion. Meanwhile, the power ratio between the high-power electrode portion and the high-capacity electrode portion may be important so that the high-power electrode portion generates power more effective than that of the high-capacity electrode portion due to distribution of the power in the peak load to the high-power electrode portion. This may be represented as a power distribution characteristic. In order to increase the power distribution characteristic between the high-power electrode portion and the high-capacity electrode portion, it is preferable that total power of the high-power electrode portion (volume ratio of high-power electrode portion*power density of high-power electrode portion)/total power of the high-capacity electrode portion (volume ratio of high-capacity electrode portion*power density of high-capacity electrode portion)≥1.

In a case where the power ratio of the high-power electrode portion is one time less than that of the high-capacity electrode portion, the high-power electrode portion does not cope with the load of the electronic device in the peak load. In a case where the high-capacity electrode portion copes with the load of the electronic device, a voltage drop occurs, and hence the discharge cut-off of the secondary battery is early formed by IR drop even though the capacity of the secondary battery remains. Therefore, the actual use time of the secondary battery may be shortened. Further, since the high-capacity electrode portion copes with high power by excessively generating current, the degradation of the secondary battery is accelerated, thereby lowering the lifespan of the secondary battery.

In a case where the power ratio of the high-power electrode portion is over five times greater than that of the high-power electrode portion, the entire capacity of the high-power electrode portion in the secondary battery may be decreased. Thus, the power ratio of the high-capacity electrode portion is preferably one to five times of that of the high-power electrode portion, in terms of the power ratio between the high-power electrode portion and the high-capacity electrode portion. According to an embodiment, the high-power electrode portion prevents degradation of the high-capacity electrode portion by flexibly and rapidly generating high power in the peak load, and the high-capacity electrode portion may take charge of high-capacity of the secondary battery. In this case, the energy density of the high-capacity electrode portion is preferably 550WL or more, and the energy density of the high-power electrode portion is preferably 1/4 to 1/3 of that of the high-capacity electrode portion. Here, the energy density corresponds to the capacity of the secondary battery. That is, the energy density means a standardized value obtained by dividing the volume (L) of the secondary battery into the energy (Wh) of the secondary battery, which is obtained under a standard charging/discharging condition (e.g., 0.5C charging/0.2C discharging).

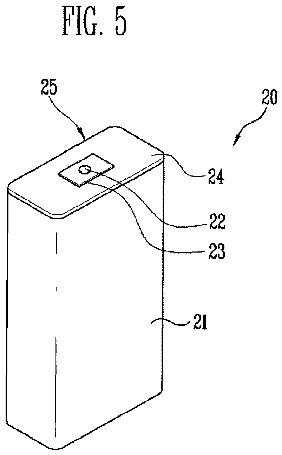

If the energy density of the high-power electrode portion is less than 1/4 of that of the high-capacity electrode portion when the energy density of the high-capacity electrode portion is 550W/L or more, the limitation of the energy density which can be compensated by the high-capacity electrode portion is beyond, and therefore, the entire capacity of the secondary battery may be decreased. If the energy density of the high-power electrode portion is exceeds 1/3 of that of the high-capacity electrode portion when the energy density of the high-capacity electrode portion is 550W/L or more, the degradation of the high-power electrode portion may be caused by a repetitive peak load. Hereinafter, another embodiment of the present invention will be described with reference to FIGS. 5 to 8. Contents of this embodiment, except the following contents, are similar to those of the embodiment described with reference to FIGS. 1 to 4, and therefore, their detailed descriptions will be omitted.

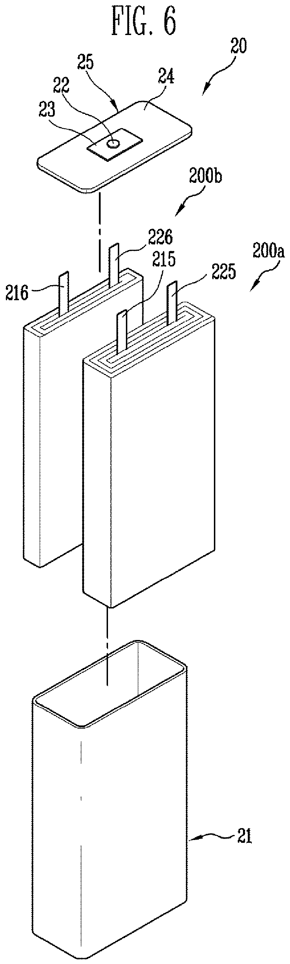

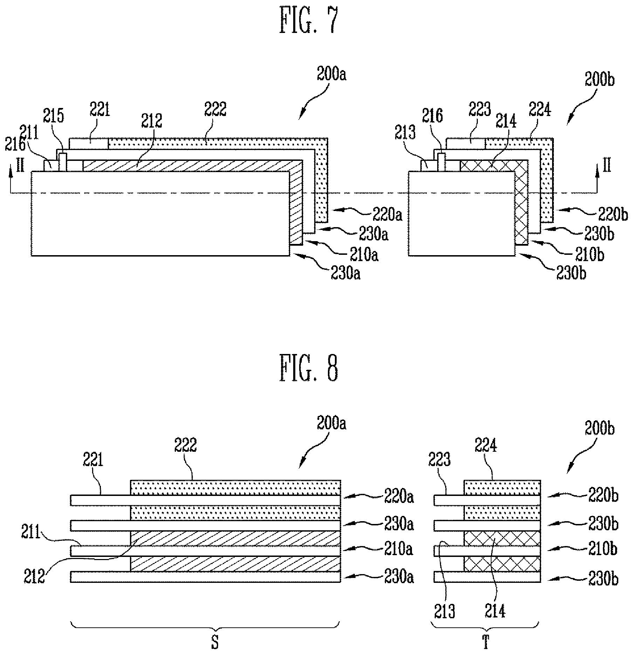

FIG. 5 is a perspective view of a secondary battery according to another embodiment of the present invention. FIG. 6 is an exploded perspective view of the secondary battery of FIG. 5. FIG. 7 is an exploded perspective view of an electrode assembly of FIG. 6. FIG. 8 is a sectional view taken along line II-II of FIG. 7.

Referring to FIGS. 5 to 8, the secondary battery 20 according to this embodiment may include a battery case 21 and 25, two or more electrode assemblies 200a and 200b accommodated in the battery case 21 and 25, and an electrolyte. The battery case 21 and 25 may include a main body 21 configured to have one opened surface and accommodate the electrode assemblies 200a and 200b and the electrolyte therein, and a cap assembly 25 configured to hermetically seal the opened surface of the main body 21. The cap assembly 25 may include a cap plate 24 formed in a shape corresponding to the opened surface of the main body 21, a negative electrode pin 22 provided to the cap plate 24, and a gasket 23 configured to insulate between the negative electrode pin 22 and the cap plate 24. Positive electrode tabs 215 and 216 of the electrode assemblies 200a and 200b may be electrically connected to the cap plate 24 or the main body 21, and negative electrode tabs of the electrode assemblies 200a and 200b may be electrically connected to the negative electrode pin 22. The electrode assemblies 200a and 200b may include a first electrode assembly 200a configured to take charge of a high-capacity electrode portion S, and a second electrode assembly 200b configured to take charge of a high-power electrode portion T. The first electrode assembly 200a that is the high-capacity electrode portion S may be formed in one jelly-roll shape by winding a first positive electrode plate 210a, a first electrode plate 220a and a separator 230a. The second electrode assembly 200b that is the high-power electrode portion T may be formed in another jelly-roll shape by winding a second positive electrode plate 210b, a second negative electrode plate 220b and a separator 23b, separately from the first positive electrode plate 210a, the first negative electrode plate 220a and the separator 230a. That is, in the secondary battery 20 according to this embodiment, the high-capacity electrode portion S and the high-power electrode portion T are provided separately from each other, to be accommodated in the one battery case 21.

The high-capacity electrode portion S includes the first positive electrode plate 210a and the first negative electrode plate 220a. Here, the first positive electrode plate 210 includes a first positive electrode non-coating portion 211 in which a first positive electrode active material is not coated on a first positive electrode substrate so that the first positive electrode substrate is exposed, and a first positive electrode active material coating portion 212 in which the first positive electrode active material is coated on the first positive electrode substrate. The first negative electrode plate 220a includes a first negative electrode non-coating portion 221 in which a first negative electrode active material is not coated on a first negative electrode substrate so that the first negative electrode substrate is exposed, and a first negative electrode active material coating portion 222 in which the first negative electrode active material is coated on the first negative electrode substrate. Then, the separator 230a is interposed between the first positive electrode plate 210a and the first negative electrode plate 220a, opposite to each other, thereby forming the high-capacity electrode portion S. A first positive electrode tab 215 may be provided to the first positive electrode non-coating portion 211, and a first negative electrode tab may be provided to the first negative electrode non-coating portion 221.

The high-power electrode portion T includes the second positive electrode plate 210b and the second negative electrode plate 220b. Here, the second positive electrode plate 210b includes a second positive electrode non-coating portion 213 in which a second positive electrode active material is not coated on a second positive electrode substrate so that the second positive electrode substrate is exposed, and a second positive electrode active material coating portion 214 in which the second positive electrode active material is coated on the second positive electrode substrate. The second negative electrode plate 220b includes a second negative electrode non-coating portion 223 in which a second negative electrode active material is not coated on a second negative electrode substrate so that the second negative electrode substrate is exposed, and a second negative electrode active material coating portion 224 in which the second negative electrode active material is coated on the second negative electrode substrate. Then, the separator 230b is interposed between the second positive electrode plate 210b and the second negative electrode plate 220b, opposite to each other, thereby forming the high-power electrode portion T. A second positive electrode tab 216 may be provided to the second positive electrode non-coating portion 213, and a second negative electrode tab may be provided to the second negative electrode non-coating portion 223. Although the first and second negative electrode tabs are not shown in these figures, the first and second negative electrode tabs may be protruded in the same direction to face the first and second positive electrode tabs in the opposite directions.

In a case where the power density of the high-power electrode portion T is at least four times greater than that of the high-capacity electrode portion S, the volume of the second positive electrode active material coating portion 214 may be 2 vol% to 20 vol% of that of the first and second positive electrode active material coating portions 212 and 214. That is, the high-power electrode portion T has a power density relatively higher than that of the high-power electrode portion S. Thus, the high-power electrode portion T can rapidly generate high current in the peak load, and the size of the high-power electrode portion T can be provided relatively smaller than that of the high-capacity electrode portion S.

The first positive electrode tab 215 of the high-capacity electrode portion S may be electrically connected to the second positive electrode tab 216 of the high-power electrode portion S, and the first negative electrode tab of the high-capacity electrode portion may be electrically connected to the second negative electrode tab of the high-power electrode portion T. Thus, the high-capacity electrode portion S can be connected in parallel to the high-power electrode portion T, and the high-capacity electrode portion S and the high-power electrode portion T can interact with each other by supplementing current with each other in the secondary battery. For example, in a case where the secondary battery 20 is used as a power source of an electronic device, the high-power electrode portion T and the high-capacity electrode portion S generate current at a ratio of approximately 1:1 in the base load of the electronic device. In the peak load of the electronic device, the high-power electrode portion T instantaneously generates high power, and the high-power electrode portion S supplement current of the high-power electrode portion T. The loss of capacity that may be generated in the high-power electrode portion T can be offset by the high-capacity electrode portion S. Thus, in the secondary battery 20 according to this embodiment, high current is flexibly generated at a peak voltage, so that it is possible to prevent degradation of the secondary battery, caused by the occurrence of instantaneous high current. Further, the capacity of the secondary battery 20 can be improved by the high-capacity electrode portion S, thereby increasing the lifespan of the secondary battery.

Hereinafter, the performance of the secondary battery shown in FIGS. 5 to 8 is compared with a comparative example that is a related art secondary battery.

### Embodiment 1

Lithium cobalt oxide (LiCoO₂) was used as the first positive electrode active material, and the lithium cobalt oxide, polyvinylidene fluoride as a binder and acetyl black as a conducting agent were mixed at a weight ratio of 92:4:4. The mixed materials were dispersed in n-methyl-2-pyrrolidone (NMP), thereby preparing a slurry including the first positive electrode material. A first positive electrode active material coating portion was formed by coating the prepared slurry on an aluminum foil (first positive electrode substrate) formed in a sheet shape with a thickness of 20µm and then dried and rolled, thereby forming a first positive electrode plate so that the power density of the first positive electrode plate was 560W/L. Subsequently, a first positive electrode tab made of nickel was welded on a first positive electrode non-coating portion in which the first positive electrode active material was not coated on the first positive electrode substrate.

A second positive electrode plate was manufactured identically to the first positive electrode plate, except that the loading level of a second positive electrode active material coating portion was adjusted so that the power density of a second positive electrode plate was 4500WL, and the second positive electrode plate was formed so that the volume of the second positive electrode active material coating portion was 2 vol% of the total volume of the first and second positive electrode active material coating portions.

Artificial graphite was used as a first negative electrode active material, and the artificial graphite and styrene-butadiene rubber as a binder were mixed at a weight ratio of 98:2, and the mixture was dispersed in water, thereby preparing a slurry including the first negative electrode active material. A first negative electrode active material coating portion was formed by coating the prepared slurry on a copper foil with a thickness of 15 µm and then dried and rolled, thereby forming a first negative electrode plate. In the first negative electrode plate, a second negative electrode tab made of nickel was welded on a first negative electrode non-coating portion.

The second negative electrode plate was formed identically to the first positive electrode plate, except that the second negative electrode plate was formed so that the volume of the second negative electrode active material coating portion was 2 vol% of the total volume of the first and second negative electrode active material coating portions.

A first electrode assembly as a high-capacity electrode portion was manufactured by interposing a film-shaped separator made of polyethylene (PE) with a thickness of 20 µm between the first positive electrode plate and the first negative electrode plate and winding, in a jelly-roll shape, the first positive electrode plate, the first negative electrode plate and the separator. In addition, a second electrode assembly as a high-capacity electrode portion was manufactured by interposing a film-shaped separator made of polyethylene (PE) with a thickness of 20 µm between the second positive electrode plate and the second negative electrode plate and winding, in a jelly-roll shape, the second positive electrode plate, the second negative electrode plate and the separator. The first and second electrode assemblies were aligned so that the first and second positive electrode tabs were protruded in the same direction. Then, the first and second positive electrode tabs were welded together with separate nickel leads, and the first and second negative electrode tabs were also welded together with separate nickel leads. The first and second electrode assemblies manufactured as described above were accommodated, together with an electrolyte, in one battery case, and then electrically connected to each other, thereby manufacturing a secondary battery. A mixture solution of ethylene carbonate (EC)/ethyl methyl carbonate (EMC) (volume ratio of 3:7), in which 0.5M LiPF₆ was dissolved, was used as the electrolyte.

### Embodiment 2

A secondary battery was manufactured identical to the of Embodiment 1, except that the loading level of the second positive electrode active material coating portion was adjusted so that the power density of the second positive electrode plate was 4500W/L, and the second positive electrode plate was formed so that the volume of the second positive electrode active material coating portion was 20 vol% of the total volume of the first and second positive electrode active material coating portions.

### Comparative Example 1

A secondary battery was manufactured identically to that of Embodiment 1, except that the loading level of the first and second positive electrode active material coating portions was adjusted so that the power density of the second positive electrode plate was equal to that of the first positive electrode plate, i.e., that the power density of the first and second positive electrode plates was 560W/L, and the second positive electrode plate was formed so that the volume of the second positive electrode active material coating portion was 50 vol% of the total volume of the first and second positive electrode active material coating portions.

**Table 1**

| | Volume of second positive electrode active material coating portion with respect to first and second positive electrode active material coating portions | Power density of high-power electrode portion (W/L) | Power density of high-capacity electrode portion (W/L) | Nominal capacity (mAh) | Capacity in peak load (mAh) |
|---|---|---|---|---|---|
| Embodiment 1 | 2 | 5000 | 800 | 2784 | 2704 |
| Embodiment 2 | 20 | 5000 | 800 | 2640 | 2600 |
| Comparative Example 1 | 50 | 800 | 800 | 2800 | 2000 |

Referring to Table 1, the power density of the high-power electrode portion with respect to that of the high-capacity electrode portion was identified using the secondary batteries manufactured in Embodiment 1, Embodiment 2 and Comparative Example 1. In addition, the nominal capacity of each secondary battery and the capacity of each secondary battery in the peak load were identified. In Table 1, the secondary battery of Comparative Example 1 was provided so that the first and second positive electrode active material coating portions had the same power density with the same volume. Thus, although the secondary battery of Comparative Example 1 is not divided into the high-power electrode portion and the high-capacity electrode portion, the power density of the high-power electrode portion and the power density of the high-capacity electrode portion, which are described in Table 1, means a portion including the first and second positive electrode active material coating portions simply spaced apart from each other.

Here, the nominal capacity means a capacity (3.0V as 0.2C, CC discharging capacity as cut-off) expected when the secondary battery is initially designed. The capacity in the peak load means an average capacity actually available in the peak load state when a GSM cellular phone is used by employing each secondary battery in the GSM cellular phone.

As shown in Table 1, the secondary battery of Embodiment 1 or 2 was manufactured as a secondary battery having a size similar to that of the secondary battery of Comparative Example 1, using the same battery case. In Embodiment 1 or 2, the nominal capacity of the secondary battery was shown lower than that of the secondary battery in Comparative Example 1. On the other hand, the actual capacity of the secondary battery in Embodiment 1 or 2 was equal to or higher than that of the secondary battery in Comparative Example 1. In a case where the high-power electrode portion is provided with the volume of the secondary battery in Embodiment 1 or 2, the secondary battery in Embodiment 1 or 2 is efficiently operated in the peak load when the secondary battery is actually used, even though the nominal capacity of the secondary battery in Embodiment 1 or 2 is lower than that of the secondary battery in Comparative Example 1. Thus, it can be seen that the actual capacity of the secondary battery in Embodiment 1 or 2 is higher than that of the secondary battery in Comparative Example. This means that, when the secondary battery is used as a power source of the same electronic device, the secondary battery in Embodiment 1 or 2 can be used longer than that in the Comparative Example 1. Thus, it can be seen that the lifespan of the secondary battery in Embodiment 1 or 2 is higher than that of the secondary battery in Comparative Example.

Secondary batteries of Embodiments 3 to 6 and Comparative Examples 2 and 3 were manufactured using the same manner of Embodiment 1, except that the power density of the high-power electrode portion is different from that of the high-capacity electrode portion. Power characteristics of the secondary batteries manufactured as described above were identified by employing the secondary batteries as power sources of the GSM cellular phone. When the GSM cellular phone is in the peak load state, a case where the capacity of the secondary battery is approximately matched to a corresponding nominal capacity of the secondary battery was designated by OK. On the other hand, a case where it is recognized that the capacity of the secondary battery does not exist in the GSM cellular phone even though the nominal capacity of the secondary battery remains was designated by NG.

**Table 2**

| | Power density of high-power electrode portion (W/L) | Power density of high-capacity electrode portion (W/L) | Power characteristic in peak load |
|---|---|---|---|
| Embodiment 3 | 4500 | 560 | OK |
| Embodiment 4 | 8000 | 560 | OK |
| Embodiment 5 | 3000 | 630 | OK |
| Embodiment 6 | 7500 | 630 | OK |
| Comparative Example 2 | 1340 | 560 | NG |
| Comparative Example 3 | 630 | 560 | NG |

Referring to Table 2, it can be seen that the power characteristics of the secondary batteries in the peak load are excellent in Embodiments 3 to 6. This is because the high-power electrode portion in each secondary battery appropriately copes with high power in the peak load. The secondary battery in Embodiments 3 to 6 can be used with a capacity equal to or higher than the nominal capacity thereof. On the other hand, it can be seen that, in Comparative Examples 2 and 3, the power characteristics in the peak load are poor. In Comparative Examples 2 and 3, since the power density of the high-power electrode portion is not appropriate, the high-power electrode portion does not cope with high power in the peak load, and therefore, the discharging cut-off of the secondary battery is early formed. That is, in the secondary batteries of Embodiments 3 to 6, it can be seen that when the power density of the high-power electrode portion is 3000WL to 8000WL and the power density of the high-capacity electrode portion is 560W/L to 630WL, the power characteristics in the peak load are excellent.

Secondary batteries of Embodiments 7 to 10 and Comparative Examples 4 and 5 were manufactured using the same manner of Embodiment 1, except that the energy density of the high-power electrode portion is different from that of the high-capacity electrode portion. Power characteristics of the secondary batteries manufactured as described above were identified by employing the secondary batteries as power sources of the GSM cellular phone.

**Table 3**

| | Power density of high-power electrode portion (W/L) | Power density of high-capacity electrode portion (W/L) | Power characteristic in peak load | Nominal capacity (mAh) |
|---|---|---|---|---|
| Embodiment 7 | 280 | 560 | OK | 2500 |
| Embodiment 8 | 120 | 560 | OK | 2300 |
| Embodiment 9 | 280 | 630 | OK | 3000 |
| Embodiment 10 | 120 | 630 | OK | 2700 |
| Comparative Example 4 | 460 | 560 | NG | 3200 |
| Comparative Example 5 | 280 | 460 | OK | 1800 |

Referring to Table 3, it can be seen that, in Embodiments 7 to 10, the power characteristics in the peak load are excellent, and the nominal capacity is also shown at a predetermined level or more. On the other hand, in Comparative Example 4, the energy density of the high-power electrode portion is high, but the power characteristics in the high-power electrode portion are lowered, and therefore, a voltage drop in the peak load occurs. As a result, the actually available capacity of the secondary battery is decreased. In Comparative Example 5, since the power characteristics in the high-power electrode portion are excellent, a capacity corresponding to the nominal capacity can be used in the peak load. However, the energy density of the high-capacity electrode portion is relatively low, and therefore, the absolute capacity of the secondary battery is low. As a result, the use time of the GSM cellular phone is decreased. That is, it can be seen that the total energy density (or capacity) and power distribution characteristic of the secondary battery are influenced by the interaction between the energy density of the high-power electrode portion and the energy density of the high-capacity electrode portion. In the secondary battery, the total capacity of the secondary battery increases as the energy density of the high-capacity electrode portion increases. Thus, the capacity of the secondary battery is advantageous as the energy density of the high-capacity electrode portion increases. In a case where the energy density of the high-capacity electrode portion is 560Wh/L to 630Wh/L, the energy density of the high-power electrode portion is preferably 120Wh/L to 280Wh/L in terms of the power distribution characteristic.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A secondary battery (10), comprising:
• a high capacity electrode portion (S) comprising a first positive electrode plate (110a), a first negative electrode plate (120a) opposite to the first positive electrode plate (110a), and a first separator portion (130) interposed between the first positive electrode plate (110a) and the first negative electrode plate (120a);
• a high power electrode portion (T) comprising a second positive electrode plate (110b), a second negative electrode plate (120b) opposite to the second positive electrode plate (110b), and a second separator portion (130) interposed between the second positive electrode plate (110b) and the second negative electrode plate (120b); and
• a battery case (11, 21) configured to accommodate the high-capacity electrode portion (S), the high-power electrode portion (T) and an electrolyte therein, **characterised in that** a volume of a second positive electrode active material coating portion (114) coated on the second positive electrode plate (110b) is 2 vol% to 20 vol% of that of a first positive electrode active material coating portion (112) coated on the first positive electrode plate (110a) and said second positive electrode active material coating portion (114) wherein a power density of the second electrode portion (T) is at least four times greater than that of the first electrode portion (S).

2. The secondary battery of claim 1, wherein a power ratio is not smaller than one and at most five, the power ratio being determined as ratio of a first value to a second value, the first value being obtained by multiplying the volume of the high-power electrode portion by the power density of the high-power electrode portion and the second value being obtained by multiplying the volume of the high-capacity electrode portion by the power density of the high-capacity electrode portion.

3. The secondary battery of one of the preceding claims wherein an energy density of the high-capacity electrode portion is at least 550Wh/L, preferably 560Wh/L to 630Wh/L, and an energy density of the high-power electrode portion is 120Wh/L to 280Wh/L, preferably 1/4 to 1/3 of that of the high-capacity energy portion.

4. The secondary battery of one of the preceding claims wherein the high-capacity electrode portion and the high-power electrode portion are connected in parallel to each other.

5. The secondary battery of one of the preceding claims wherein at least one pair of the first and second electrode plates of the first and second positive electrode plates (110a, 110b) and the first and second negative electrode plates (120a, 120b) is integrally formed using connected first and second electrode substrate connected in a first direction.

6. The secondary battery of claims 5 wherein the first and second positive electrode plates (110a, 110b) are integrally formed using connected first and second positive electrode substrate connected in the first direction and the first and second negative electrode plates (120a, 120b) are integrally formed using connected first and second negative electrode substrate connected in the first direction, the connected first and second negative electrode substrates being separated from the connected first and second positive electrode substrates by a separator (130) comprising the first and second separator portions wherein the integrally formed first and second positive electrode plates (110a, 110b), the integrally formed first and second negative electrode plates (120a, 120b) and the separator (130) are wound in one jelly-roll shape.

7. The secondary battery of claim 4 wherein a first positive electrode non-coating portion (111), the first positive electrode active material coating portion (112), a second positive electrode non-coating portion (113) and the second positive electrode active material coating portion (114) are sequentially aligned on the first and second positive electrode substrates connected in the first direction.

8. The secondary battery of claim 7 wherein a first positive electrode non-coating portion (111), the first positive electrode active material coating portion (112), the second positive electrode active material coating portion (114) and a second positive electrode non-coating portion (113) are sequentially aligned in a first direction on the first and second positive electrode substrates connected in the first direction.

9. The secondary battery of one of claims 7 and 8, wherein first and second positive electrode tabs (115, 116) are respectively provided to the first and second positive electrode non-coating portions (111, 113), the first and second positive electrode tabs (115, 116) being electrically connected to each other by being protruded in a second direction perpendicular to the first direction.

10. The secondary battery of one of claims 6 to 9 wherein a first negative electrode non-coating portion (121), a first negative electrode active material coating portion (122), a second negative electrode non-coating portion (123) and a second negative electrode active material coating portion (124) are sequentially aligned in a first direction on the first and second negative electrode substrates connected in the first direction.

11. The secondary battery of one of claims 6 to 9, wherein a first negative electrode non-coating portion (121), a first negative electrode active material coating portion (122) and a second negative electrode active material coating portion (124) are sequentially aligned in a first direction on the first and second negative electrode substrates connected in the first direction.

12. The secondary battery of one of preceding claims wherein the high-power electrode portion (T) and the high-capacity electrode portion (S) share the electrolyte.

## Patentansprüche

1. Eine Sekundärbatterie (10), aufweisend:
• einen hochkapazitiven Elektrodenabschnitt (S), der eine erste positive Elektrodenplatte (110a), eine erste negative Elektrodenplatte (120a), die der ersten positiven Elektrodenplatte (110a) gegenüberliegt, und einen ersten Separatorabschnitt (130), der zwischen die erste positive Elektrodenplatte (110a) und die erste negative Elektrodenplatte (120a) eingefügt ist, aufweist;
• einen Hochleistungselektrodenabschnitt (T), der eine zweite positive Elektrodenplatte (110b), eine zweite negative Elektrodenplatte (120b), die der zweiten positiven Elektrodenplatte (110b) gegenüberliegt, und einen zweiten Separatorabschnitt (130), der zwischen die zweite positive Elektrodenplatte (110b) und die zweite negative Elektrodenplatte (120b) eingefügt ist, aufweist; und
• ein Batteriegehäuse (11, 21), das konfiguriert ist, um den hochkapazitiven Elektrodenabschnitt (S), den Hochleistungselektrodenabschnitt (T) und einen Elektrolyt darin aufzunehmen,
**dadurch gekennzeichnet, dass**
ein Volumen eines zweiten positiven Elektrodenaktivmaterial-Beschichtungsabschnitts (114), der auf die zweite positive Elektrodenplatte (110b) aufgebracht wird, 2 Vol.-% bis 20 Vol.-% des Volumens eines ersten positiven Elektrodenaktivmaterial-Beschichtungsabschnitts (112), der auf die erste positive Elektrodenplatte (110a) und den besagten zweiten positiven Elektrodenaktivmaterial-Beschichtungsabschnitt (114) aufgebracht wird, beträgt, wobei eine Leistungsdichte des zweiten Elektrodenabschnitts (T) zumindest viermal größer als die Leistungsdichte des ersten Elektrodenabschnitts (S) ist.

2. Die Sekundärbatterie nach Anspruch 1, wobei ein Leistungsverhältnis nicht kleiner als eins und maximal fünf ist, wobei das Leistungsverhältnis als Verhältnis eines ersten Werts zu einem zweiten Wert bestimmt ist, wobei der erste Wert durch Multiplizieren des Volumens des Hochleistungselektrodenabschnitts mit der Leistungsdichte des Hochleistungselektrodenabschnitts erhalten wird und der zweite Wert durch Multiplizieren des Volumens des hochkapazitiven Elektrodenabschnitts mit der Leistungsdichte des hochkapazitiven Elektrodenabschnitts erhalten wird.

3. Die Sekundärbatterie nach einem der vorhergehenden Ansprüche, wobei eine Energiedichte des hochkapazitiven Elektrodenabschnitts zumindest 550Wh/L, vorzugsweise 560Wh/L bis 630Wh/L, beträgt, und eine Energiedichte des Hochleistungselektrodenabschnitts 120Wh/L bis 280Wh/L, vorzugsweise 1/4 bis 1/3, derjenigen des hochkapazitiven Energieabschnitts beträgt.

4. Die Sekundärbatterie nach einem der vorhergehenden Ansprüche, wobei der hochkapazitive Elektrodenabschnitt und der Hochleistungselektrodenabschnitt parallel zueinander geschaltet sind.

5. Die Sekundärbatterie nach einem der vorhergehenden Ansprüche, wobei zumindest ein Paar der ersten und zweiten Elektrodenplatte der ersten und zweiten positiven Elektrodenplatte (110a, 110b) und der ersten und zweiten negativen Elektrodenplatte (120a, 120b) einstückig mittels verbundenen ersten und zweiten Elektrodensubstrats, die in einer ersten Richtung verbunden sind, ausgebildet wird.

6. Die Sekundärbatterie nach Anspruch 5, wobei die erste und zweite positive Elektrodenplatte (110a, 110b) einstückig mittels verbundenen ersten und zweiten positiven Elektrodensubstrats, die in der ersten Richtung verbunden sind, ausgebildet wird, und die erste und zweite negative Elektrodenplatte (120a, 120b) einstückig mittels verbundenen ersten und zweiten negativen Elektrodensubstrats, die in der ersten Richtung verbunden sind, ausgebildet wird, wobei das verbundene erste und zweite negative Elektrodensubstrat vom verbundenen ersten und zweiten positiven Elektrodensubstrat durch einen Separator (130), der den ersten und zweiten Separatorabschnitt aufweist, getrennt sind, wobei die einstückig ausgebildete erste und zweite positive Elektrodenplatte (110a, 110b), die einstückig ausgebildete erste und zweite negative Elektrodenplatte (120a, 120b) und der Separator (130) in einer gewickelten Form gewickelt sind.

7. Die Sekundärbatterie nach Anspruch 4, wobei ein erster positiver Elektroden-Nichtbeschichtungsabschnitt (111), der erste positive Elektrodenaktivmaterial-Beschichtungsabschnitt (112), ein zweiter positiver Elektroden-Nichtbeschichtungsabschnitt (113) und der zweite positive Elektrodenaktivmaterial-Beschichtungsabschnitt (114) nacheinander auf dem ersten und zweiten positiven Elektrodensubstrat, die in der ersten Richtung verbunden sind, ausgerichtet sind.

8. Die Sekundärbatterie nach Anspruch 7, wobei ein erster positiver Elektroden-Nichtbeschichtungsabschnitt (111), der erste positive Elektrodenaktivmaterial-Beschichtungsabschnitt (112), der zweite positive Elektrodenaktivmaterial-Beschichtungsabschnitt (114) und ein zweiter positiver Elektroden-Nichtbeschichtungsabschnitt (113) nacheinander in einer ersten Richtung auf dem ersten und zweiten positiven Elektrodensubstrat, die in der ersten Richtung verbunden sind, ausgerichtet sind.

9. Die Sekundärbatterie nach einem der Ansprüche 7 und 8, wobei eine erste und zweite positive Elektrodenfahne (115, 116) jeweils am ersten und zweiten positiven Elektroden-Nichtbeschichtungsabschnitt (111, 113) bereitgestellt werden, wobei die erste und zweite positive Elektrodenfahne (115, 116) elektrisch miteinander verbunden sind, indem sie in eine zweite Richtung perpendikulär zur ersten Richtung vorstehen.

10. Die Sekundärbatterie nach einem der Ansprüche 6 bis 9, wobei ein erster negativer Elektroden-Nichtbeschichtungsabschnitt (121), ein erster negativer Elektrodenaktivmaterial-Beschichtungsabschnitt (122), ein zweiter negativer Elektroden-Nichtbeschichtungsabschnitt (123) und ein zweiter negativer Elektrodenaktivmaterial-Beschichtungsabschnitt (124) nacheinander in einer ersten Richtung auf dem ersten und zweiten negativen Elektrodensubstrat, die in der ersten Richtung verbunden sind, ausgerichtet sind.

11. Die Sekundärbatterie nach einem der Ansprüche 6 bis 9, wobei ein erster negativer Elektroden-Nichtbeschichtungsabschnitt (121), ein erster negativer Elektrodenaktivmaterial-Beschichtungsabschnitt (122) und ein zweiter negativer Elektrodenaktivmaterial-Beschichtungsabschnitt (124) nacheinander in einer ersten Richtung auf dem ersten und zweiten negativen Elektrodensubstrat, die in der ersten Richtung verbunden sind, ausgerichtet sind.

12. Die Sekundärbatterie nach einem der vorhergehenden Ansprüche, wobei der Hochleistungselektrodenabschnitt (T) und der hochkapazitive Elektrodenabschnitt (S) den Elektrolyt gemeinsam verwenden.

## Revendications

1. Batterie secondaire (10), comprenant :
. une partie d'électrode de haute capacité (S) comprenant une première plaque d'électrode positive (110a), une première plaque d'électrode négative (120a) opposée à la première plaque d'électrode positive (110a), et une première partie de séparateur (130) interposée entre la première plaque d'électrode positive (110a) et la première plaque d'électrode négative (120a) ;
. une partie d'électrode de haute puissance (T) comprenant une deuxième plaque d'électrode positive (110b), une deuxième plaque d'électrode négative (120b) opposée à la deuxième plaque d'électrode positive (110b), et une deuxième partie de séparateur (130) interposée entre la deuxième plaque d'électrode positive (110b) et la deuxième plaque d'électrode négative (120b) ; et
. un boîtier de batterie (11, 21) configuré pour loger la partie d'électrode de haute capacité (S), la partie d'électrode de haute puissance (T) et un électrolyte dans celui-ci,
**caractérisée en ce que**
un volume d'une partie de revêtement de matériau actif de deuxième électrode positive (114) déposée sur la deuxième plaque d'électrode positive (110b) est égal à 2 % en volume à 20 % en volume de celui d'une partie de revêtement de matériau actif de première électrode positive (112) déposée sur la première plaque d'électrode positive (110a) et ladite partie de revêtement de matériau actif de deuxième électrode positive (114), dans laquelle une densité de puissance de la deuxième partie d'électrode (T) est au moins quatre fois plus grande que celle de la première partie d'électrode (S).

2. Batterie secondaire selon la revendication 1, dans laquelle un rapport de puissance n'est pas inférieur à un et est au plus égal à cinq, le rapport de puissance étant déterminé comme étant le rapport entre une première valeur et une deuxième valeur, la première valeur étant obtenue en multipliant le volume de la partie d'électrode de haute puissance par la densité de puissance de la partie d'électrode de haute puissance et la deuxième valeur étant obtenue en multipliant le volume de la partie d'électrode de haute capacité par la densité de puissance de la partie d'électrode de haute capacité.

3. Batterie secondaire selon l'une des revendications précédentes, dans laquelle une densité d'énergie de la partie d'électrode de haute capacité est au moins de 550 Wh/L, de préférence de 560 Wh/L à 630 Wh/L, et une densité d'énergie de la partie d'électrode de haute puissance est de 120 Wh/L à 280 Wh/L, de préférence égale à 1/4 à 1/3 de celle de la partie d'énergie de haute capacité.

4. Batterie secondaire selon l'une des revendications précédentes, dans laquelle la partie d'électrode de haute capacité et la partie d'électrode de haute puissance sont connectées en parallèle l'une à l'autre.

5. Batterie secondaire selon l'une des revendications précédentes, dans laquelle au moins une paire des première et deuxième plaques d'électrode des première et deuxième plaques d'électrode positive (110a, 110b) et des première et deuxième plaques d'électrode négative (120a, 120b) est formée d'un seul tenant en utilisant des premier et deuxième substrats d'électrode connectés qui sont connectés dans une première direction.

6. Batterie secondaire selon la revendication 5, dans laquelle les première et deuxième plaques d'électrode positive (110a, 110b) sont formées d'un seul tenant en utilisant des premier et deuxième substrats d'électrode positive connectés qui sont connectés dans la première direction et les première et deuxième plaques d'électrode négative (120a, 120b) sont formées d'un seul tenant en utilisant des premier et deuxième substrats d'électrode négative connectés qui sont connectés dans la première direction, les premier et deuxième substrats d'électrode négative connectés étant séparés des premier et deuxième substrats d'électrode positive connectés par un séparateur (130) comprenant les première et deuxième parties de séparateur, dans laquelle les première et deuxième plaques d'électrode positive (110a, 110b) formées d'un seul tenant, les première et deuxième plaques d'électrode négative (120a, 120b) formées d'un seul tenant et le séparateur (130) sont enroulés en une forme de roulé à la gelée.

7. Batterie secondaire selon la revendication 4, dans laquelle une partie non de revêtement de première électrode positive (111), la partie de revêtement de matériau actif de première électrode positive (112), une partie non de revêtement de deuxième électrode positive (113) et la partie de revêtement de matériau actif de deuxième électrode positive (114) sont alignées séquentiellement sur les premier et deuxième substrats d'électrode positive connectés dans la première direction.

8. Batterie secondaire selon la revendication 7, dans laquelle une partie non de revêtement de première électrode positive (111), la partie de revêtement de matériau actif de première électrode positive (112), la partie de revêtement de matériau actif de deuxième électrode positive (114) et une partie non de revêtement de deuxième électrode positive (113) sont alignées séquentiellement dans une première direction sur les premier et deuxième substrats d'électrode positive connectés dans la première direction.

9. Batterie secondaire selon l'une des revendications 7 et 8, dans laquelle des première et deuxième languettes d'électrode positive (115, 116) sont respectivement prévues sur les parties non de revêtement de première et deuxième électrodes positives (111, 113), les première et deuxième languettes d'électrode positive (115, 116) étant connectées électriquement l'une à l'autre par le fait qu'elles font saillie dans une deuxième direction perpendiculaire à la première direction.

10. Batterie secondaire selon l'une des revendications 6 à 9, dans laquelle une partie non de revêtement de première électrode négative (121), une partie de revêtement de matériau actif de première électrode négative (122), une partie non de revêtement de deuxième électrode négative (123) et une partie de revêtement de matériau actif de deuxième électrode négative (124) sont alignées séquentiellement dans une première direction sur les premier et deuxième substrats d'électrode négative connectés dans la première direction.

11. Batterie secondaire selon l'une des revendications 6 à 9, dans laquelle une partie non de revêtement de première électrode négative (121), une partie de revêtement de matériau actif de première électrode négative (122) et une partie de revêtement de matériau actif de deuxième électrode négative (124) sont alignées séquentiellement dans une première direction sur les premier et deuxième substrats d'électrode négative connectés dans la première direction.

12. Batterie secondaire selon l'une des revendications précédentes, dans laquelle la partie d'électrode de haute puissance (T) et la partie d'électrode de haute capacité (S) partagent l'électrolyte.
